Europäisches Patentamt

European Patent Office

Office européen des brevets

(11) Publication number: **0 262 922**
**A2**

# (12) EUROPEAN PATENT APPLICATION

(21) Application number: **87308614.4**

(22) Date of filing: **29.09.87**

(51) Int. Cl.⁴: **G 06 F 13/38**
**G 05 B 19/417**

(30) Priority: **29.09.86 US 912914**

(43) Date of publication of application:
**06.04.88 Bulletin 88/14**

(84) Designated Contracting States: **DE FR GB IT NL**

(71) Applicant: **TEXAS INSTRUMENTS INCORPORATED**
**13500 North Central Expressway**
**Dallas Texas 75265 (US)**

(72) Inventor: **Cornwell, Peter J.**
**9 High Street Souldrop**
**Bedford (GB)**

**Prince, Edwin**
**2807 Oakcliff Court**
**Johnson City Tennessee 37601 (US)**

**White, Joseph**
**Route 1 P.O. Box 409**
**Watauga Tennessee 37694 (US)**

**Whitinger, Robert**
**Route 3 P.O. Box 509**
**Blountville Tennessee 37617 (US)**

(74) Representative: **Abbott, David John et al**
**Abel & Imray Northumberland House 303-306 High Holborn**
**London, WC1V 7LH (GB)**

(54) Machine control system.

(57)  An adapter device which operatively connects a selected controlled machine to a central control unit via a network, the device being composed of a first group of adapter device components, including a central processing unit, memories and input/output devices, constructed and assembled solely on the basis of the operating characteristics of the central control unit; a further adapter device component constructed in accordance with the operating characteristics of the selected controlled machine, the further adapter device component being removably connected to the first group of adapter device components to produce the adapter device. The further component is produced by: providing representations of control commands which the central control unit is constructed to produce for any controlled machine; providing representations of instructions which the selected controlled machine must receive in order to respond to each of the control commands; and coding the further adapter device in accordance with the representations of control commands and the representations of instructions for causing the adapter device to perform conversions between the control commands and the instructions.

Fig. 3.

**Description**

MACHINE CONTROL SYSTEM

## BACKGROUND OF THE INVENTION

The present invention relates to the connection of digitally controlled machines to a central control system.

Automated industrial systems are typically composed of a central control unit, a signal distributing network, and machines which are to be controlled in a coordinated manner to perform a manufacturing operation, which can be of the discrete or process control type. In most cases, such a system is made up of components originating from different manufacturers and, as a result, having a certain degree of incompatibility. Such incompatibility requires the disposition, between each machine and the central control unit, of some arrangement for effecting conversion between the signals produced by the central control unit, i.e. the command set of the central control unit, and the signals to which the machine responds, i.e. the command set of the machine. A command set is the group of messages which a given device can exchange with other devices.

Heretofore, this has been done by specially programming the control unit to generate signals which are compatible with each machine. Then each machine can be connected to the control unit by separate wiring or can be connected to an existing network associated with the control unit, together with an individual network interface.

As the number and variety of different machines increase, these approaches become increasingly cumbersome because each time a new type or machine is added, the control unit must be reprogrammed and, possibly, additional wiring must be provided to connect the machine to the control unit.

## SUMMARY OF THE INVENTION

It is an object of the present invention to facilitate connection of a secondary device, i.e. a machine or system to be controlled, to a central control system.

A subsidiary object of the invention is to eliminate the need for any significant programming of the control computer when a secondary device is added or exchanged.

A further object of the invention is to localize all secondary device ¬ specific command translating circuitry physically at the device.

Essentially, the invention enables a uniform set of commands and procedures produced by a central control unit to be employed for causing a diverse set of secondary devices, or machines, to perform similar tasks. The invention achieves this by the provision of a special device, termed a secondary adapter, or communication adapter, which is constructed to effect conversion, with respect to commands and responses, between the command set of the specific machine and that of the central control unit. The adapter is composed of a microprocessor, which can be constructed in a conventional manner, configured and programmed to communicate with the central control unit, together with a replaceable device, in the form of a plug-in module, configured and/or programmed to adapt the microprocessor to the specific machine which is to be controlled via that adapter. Thus a single adapter structure is provided for all possible machines, and any one adapter can be provided with a selected plug-in module to enable that adapter to convert signals in accordance with the requirements of the specific machine to which it is to be connected.

The above and other objects are achieved by provision of an adapter device which operatively connects a selected controlled machine to a central control unit via a network, and which is produced by: constructing and assembling a first group of adapter device components, including a central processing unit, memory means and input/output devices, solely on the basis of the operating characteristics of the central control unit; constructing a further adapter device component in accordance with the operating characteristics of the selected controlled machine; and removably connecting the further adapter device component to the first group of adapter device components to produce the adapter device.

## BRIEF DESCRIPTION OF THE DRAWINGS

Figure 1 is a block diagram of an industrial system according to the present invention.

Figure 2 is a block diagram of a secondary adapter according to the invention.

Figure 3 is an information flow diagram illustrating programming of a module according to the invention.

## DESCRIPTION OF THE PREFERRED EMBODIMENTS

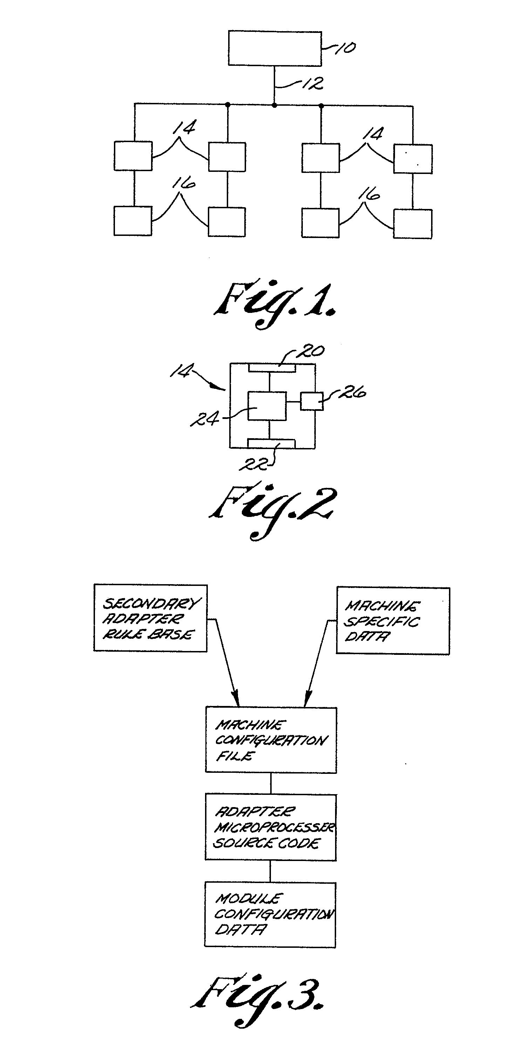

Figure 1 illustrates an industrial control system which include a central control unit 10 consisting essentially of a computer, which can be one of the types currently utilized for such purpose. This computer is connected to a network 12 which is preferably permanently installed in the industrial facility to be accessible at all points where a machine may be required. Unit 10 is connected to network 12 in such a manner that the same signals appear at every point in the network.

According to the invention, the network is connected to a plurality of secondary adapters 14, each of which is connected to a respective machine 16. Machines 16 may be, for example, robots, programmable controllers, personal computers, monitoring devices, etc.

As shown in Figure 2, each adapter 14 is composed of a network interface 20 constructed to be connected to network 12 and to communicate with unit 10, and a machine interface 22, normally a serial port, constructed to be connected to, and to communicate with, any machine with is to be incorporated into the system, a microprocessor 24 which includes a central processing unit, memories, input/output devices, etc., configured and/or programmed to exchange information with central control unit 10, and a component 26 in the form of a plug-in module, and preferably constituted by an EPROM which is specially configured in accordance with the specific signal requirements, i.e., the command set of the selected machine to which the adapter is to be connected. Component 26, when plugged in, is connected to microprocessor 24 so that microprocessor 24 is programmed, in a hard-wired manner, to constitute a command and response signal translator between the selective machine 16 and central control unit 10.

Microprocessor 24 is preferably constructed to store information identifying the present operating state of the machine and to determine whether a specific command set by control unit 10 can be executed by the connected machine. The present machine operating state information stored in microprocessor 24 can be based on machine state information provided by the machine, if the machine is of a type which produces this information, or can be based on the history of the last command or sequence of commands sent to the machine.

In a system embodying the present invention, it is only necessary to initially supply to control unit 10 information identifying each machine which is presently connected to the system and to provide a separate address code for each machine, so that each command signal supplied to network 12 will be accepted by the adapter 14 connected to that machine for which the command signal is intended. Such procedures are conventional in this field.

At the start of the operation of the system, in response to a request signal from unit 10, each adapter 14 supplies to network 12, and thus to unit 10, a signal indicating whether or not the machine 16 associated with that adapter is initialized. If the machine is not initialized, the control unit then carries out and an initialization procedure and, upon satisfactory completion thereof, the corresponding adapter supplies unit 10 with a signal indicating that the associated machine is in its ready state.

Thereafter, all of the machines are controlled in a manner determined by the operating program supplied to control unit 10 in a conventional manner, with control unit 10 being continually supplied by adapters 14 with information identifying the present operating states of the individual machines.

The signals conducted between control unit 10 and all of the adapters 14 are based on a uniform set of commands and procedures utilizing an industry standard protocol, such as that known as HDLC.

As noted above, an adapter according to the present invention makes use of a programmable module 26 which converts a general use adapter to one which is specifically configured to communicate with a selected machine, or device.

The present invention includes a novel approach to the construction of such module, which expedites such construction and thus reduces the time required to add any new machine or device to a system.

The control system itself, and specifically control unit 10, can be constructed to control machine operation on the basis of a standard set of commands which includes all of the commands required by any machine or device which is to be controlled. According to the present invention, configuration of the module is effected by a procedure which involves producing a set of machine-specific commands, mapping those commands to the above-mentioned standard set of commands, and, on the basis thereof, generating the information necessary to program the module, possibly together with documentation and other support information.

It has been found that any machine can be fully controlled by a set of 33 standardized commands, which constitute a universal command language.

The example of these commands are: calibrate machine; download program to machine; upload program from machine; start program; stop program; and temporarily halt operation. Each such command is in the same form for each machine.

This rule base is incorporated into a computer program which controls the sequence of operations as required to arrive at the required module configuration data.

According to a first embodiment of the invention, this rule base is supplemented by data relating to the specific selected machine to create a machine configuration file, which is a series of instructions designating the commands which must be supplied to the selected machine in order to cause it to properly respond to each of the standardized commands.

A program for carrying out the above-described operations has been developed and is attached to the present specification as an Appendix. This program was developed for use on a computer utilizing the operating system marketed under the trademark Unix System V.

The above-described operations are depicted in Figure 3.

The machine-specific data is provided by an individual on the basis of a detailed knowledge of the specific machine and of the secondary adapter rule base.

The above-mentioned program generates machine-specific data in assembly language format and links this data with other software to produce a combined program in the form of source code. This combined program is then assembled and linked according to conventional techniques to produce a file in machine language form. This file, which can include standard code information for the operating system of the control unit, is then inputted to a conventional, commercially available EPROM programmer to program a blank EPROM which will then constitute the plug-in module for the adapter.

According to a further feature of the invention, the operator, during the inputting procedure, supplies text describing specific features of the selected machine. This text is then used to automatically insert specific information into a standard printed format to create a user's manual which will accompany the specific device.

According to a second embodiment of this aspect of the invention, it is contemplated to provide a further rule base, termed a machine class rule base, which provides a set of machine configuration rules for each class of machine, such classes being, for example, robots, machine tools, monitoring devices, etc. The machine class rule base for each type, or class, or machines, is itself prepared on the basis of expert knowledge of the requirements and characteristics which are common to the machines of that class. The machine class rule base cooperates with the secondary adapter rule base to create an interactive procedure in which the operator is presented with a sequence of specific questions relating to each command of the universal command language. The purpose of the machine class rule base is to predefine that information which must be supplied by an operator to permit the required data for configuring, or programming, the plug-in module. As a result, with this approach, the individual who inputs the data for a specific machine need only have available information regarding the operating characteristics and specific commands for that machine, and need not be familiar with the specifics of either rule base.

An example of the manner in which this procedure would be implemented for the exemplary secondary adapter command "calibrate machine" will now be given. The secondary adapter rule base stored in the computer in the form a program asks the operator to identify the machine class for which a module is to be created and the operator identifies this class as "robots". The secondary adapter rule base then instructs the machine class rule base to call up the specific rule base for robots.

The secondary adapter rule base then forms the machine class rule for robots that data to configure the plug-in module to carry out the "calibrate machine" function is to be obtained.

The machine class rule base contains the information, based on prior expert input, that to perform the "calibrate machine" operation, it is necessary to carry out the steps of establishing communication, placing the robot arm in a known position, placing the robot end tool in a known position, verifying sensor outputs and placing the robot in a starting condition.

Under control of the machine class rule base, the operator is then interrogated as to the information, or commands, which must be delivered to the robot to perform each of the those functions. This operation will be interactive in that each response inputted by the operator will trigger an appropriate further inquiry under control of the machine class rule base.

Robots which are currently available on the market generally contain a built-in microprocessor containing the stored data which determine the signal which must be received by the robot to cause it to preform a particular operation. A relatively sophisticated robot may, for example, be preprogrammed to respond to a single "calibrate machine" command which will cause it to go through its particular calibration sequence. In this case, the operator will respond to the initial instruction associated with the "calibrate" machine operation by inputting data identifying the command to which the robot will respond and that this is the only external command required. The end result of this will be that the plug-in module will be programmed to issue this command in response to transmission from central control unit 10 to the associated secondary adapter of the "calibrate machine" universal command.

Alternatively, the particular robot which is to be controlled may require the sequence of basic instructions that make up the "calibrate machine" operation for a robot. In this case, the data identifying each instruction will be inputted by the operator in response to inquiries issued under control the machine class rule base. In this case, the operator would, at the appropriate points, be asked to input specific command data for the robot in question, such as values for the rest position of the arm, zero axis position values, clear memory command, etc.

Thus, the present invention makes it possible to add, with a minimum of effort, any desired machine to an existing system having a permanently installed network, it only be required that an appropriate plug-in module be configured and that the machine be connected to the network via the resulting specialized secondary adapter.

It will be understood that the above description of the present invention is susceptible to various modifications, changes and adaptations, and the same are intended to be comprehended within the meaning and range of equivalents of the appended claims.

## Claims

1. A method for producing an adapter device which operatively connects a selected controlled machine to a central control unit via a network, comprising:
constructing and assembling a first group of adapter device components, including a central processing unit, memory means and input/output devices, solely on the basis of the operating characteristics of the central control unit;
constructing a further adapter device component in accordance with the operating characteristics of the selected controlled machine; and
removably connecting the further adapter device component to the first group of adapter device components to produce the adapter device.

2. A method as defined in claim 1 wherein said step of constructing a further component comprises: providing representations of control commands which the central control unit is constructed to produce for any controlled machine; providing representations of instructions which the selected controlled machine must receive in order to respond to each of the control commands; and coding the further adapter device in accordance with the representations of control commands and the representations of instructions for causing the adapter device to perform conversions between the control commands and the instructions.

3. A method as defined in claim 3 wherein said step of providing representations of instructions comprises:

providing representations of information identifying the type of data which must be supplied for machines of the class containing the selected machine to enable those machines to respond to each of the control commands; and using the representations of information to interrogate an operation to obtain appropriate data for the machine.

4. An adapter device which operatively connects a selected controlled machine to a central control unit via a network, comprising:

a first group of adapter device components, including a central processing unit, memory means and input/output devices, constructed and assembled solely on the basis of the operating characteristics of the central control unit; and

a further adapter device component constructed in accordance with the operating characteristics of the selected controlled machine; said further adapter device component being removably connected to the first group of adapter device components to produce the adapter device.

5. A device as defined in claim 4 wherein said further component is constructed by providing representations of control commands which the central control unit is constructed to produce for any controlled machine; providing representations of instructions which the selected controlled machine must receive in order to respond to each of the control commands; and coding the further adapter device in accordance with the representations of control commands and the representations of instructions for causing the adapter device to perform conversions between the control commands and the instructions.

0262922

Fig.1.

Fig.2

Fig.3.